# EUROPÄISCHE PATENTSCHRIFT

(11) **EP 3 069 933 B1**
(45) Veröffentlichungstag und Bekanntmachung des Hinweises auf die Patenterteilung: **23.12.2020**
(21) Anmeldenummer: 16000534.4
(22) Anmeldetag: 05.03.2016
(51) Int. Cl.: B60Q 1/50, G03H 1/22

(54) **KRAFTFAHRZEUG MIT OPTISCHER ANZEIGE FÜR DEN AUSSENBEREICH**
MOTOR VEHICLE WITH OPTICAL DISPLAY FOR OUTDOOR USE
VEHICULE AUTOMOBILE COMPRENANT UN AFFICHAGE OPTIQUE POUR LA ZONE EXTERIEURE

(30) Priorität: 18.03.2015 DE 102015003527
(43) Veröffentlichungstag der Anmeldung: 21.09.2016
(73) Patentinhaber: AUDI AG, 85045 Ingolstadt (DE)
(72) Erfinder: Tontsch, Friedrich-Uwe, DE - 85051 Ingolstadt (DE)
(74) Vertreter: Thielmann, Frank

(56) Entgegenhaltungen:
- DE-A1- 10 034 381
- DE-A1-102006 050 548
- FR-A1- 2 949 725
- FR-A1- 2 987 909
- FR-A1- 2 992 743
- FR-A1- 2 995 269
- GB-A- 2 517 790
- JP-B2- 3 175 193
- US-A1- 2010 302 794

## Beschreibung

Die Erfindung betrifft ein Kraftfahrzeug mit einer Anzeigeeinrichtung, die selbstleuchtend ist, das heißt eine Lichtquelle aufweist. Die Anzeigeeinrichtung ist dazu ausgelegt, in einem Außenbereich des Kraftfahrzeugs eine optische Nachricht anzuzeigen. Mit anderen Worten ist die Nachricht von außerhalb des Kraftfahrzeugs sichtbar. Unter Nachricht ist im Zusammenhang mit der Erfindung ein Hinweistext oder ein graphisches Symbol zu verstehen. Zu der Erfindung gehört auch ein Verfahren zum Erzeugen der optischen Nachricht.

Aus der DE 10 2012 011 087 A1 ist hierzu bekannt, als optische Nachricht eine Abstandswarnung an einem Heck des Kraftfahrzeugs anzuzeigen, wenn ein nachfolgendes Fahrzeug zu dicht auffährt. Um einen Zeitpunkt zu bestimmen, zu welchem die Anzeigeeinrichtung aktiviert werden soll, müssen ein Abstand und eine Relativgeschwindigkeit des nachfolgenden Fahrzeugs gemessen werden. Hierzu ist eine entsprechend aufwendige Sensorik nötig.

Aus der DE 10 2004 025 251 A1 ist bekannt, in einem Kraftfahrzeug zum Erzeugen einer Nachricht einen Lichtstrahl zu erzeugen, der auf eine reflektierende Fläche auf der Heckscheibe des Kraftfahrzeugs projiziert wird und hier eine Signalinformation für einen Fahrer eines anderen Kraftfahrzeugs sichtbar macht. Beispielsweise kann hierdurch in der Heckscheibe des Kraftfahrzeugs ein Warndreieck angezeigt werden.

Aus der US 2004/0041983 A1 ist bekannt, mittels eines Lasers ein Warndreieck auf eine Straße zu projizieren. Falls ein solches Kraftfahrzeug durch Nebel fährt, kann das Warndreieck auch in den Nebel hinein projiziert werden. Dieses Verfahren benötigt stets eine außerhalb des Kraftfahrzeugs befindliche Projektionsfläche, um die optische Nachricht sichtbar zu machen.

Aus der FR 2 992 743 A1 ist bekannt, mittels einer Projektionseinrichtung des Kraftfahrzeugs ein Hologramm in Richtung des nachfolgenden Fahrzeugs zu projizieren, wobei mittels einer Analyseeinrichtung eine durchschnittliche Augenhöhe eines Fahrers des nachfolgenden Fahrzeugs ermittelt wird und ein Projektionswinkel des Hologramms in Abhängigkeit der durchschnittlichen Augenhöhe und eines Abstands zwischen dem Kraftfahrzeug und dem Fahrzeug gewählt wird.

Aus der FR 2 995 269 A1 ist bekannt, mittels eines Radarsensors des Kraftfahrzeugs den Abstand zwischen dem Kraftfahrzeug und dem Fahrzeug zu ermitteln und in Abhängigkeit von dem Abstand das Hologramm bei Unterschreiten eines Mindestabstandes erzeugt wird.

Aus der JP 3175193 B2 ist bekannt, mittels einer Projektionseinrichtung des Kraftfahrzeugs ein Hologramm zu erzeugen, welches für den Fahrer des nachfolgenden Fahrzeugs bei Unterschreiten des Mindestabstands sichtbar wird.

Aus der FR 2 949 725 A1 ist bekannt, mittels einer Projektionseinrichtung des Kraftfahrzeugs ein Hologramm zu erzeugen, welches für den Fahrer des nachfolgenden Fahrzeugs bei Unterschreiten des Mindestabstands sichtbar wird.

Aus der US 2010/0302794 A1 ist bekannt, eine Lichtsignaleinrichtung des Kraftfahrzeugs mit einer Hologrammeinrichtung zu kombinieren, um gleichzeitig ein Lichtsignal und ein davon abhängiges Hologramm zu erzeugen.

Aus der FR 2 987 909 A1 ist bekannt, mittels einer Projektionseinrichtung des Kraftfahrzeugs ein Hologramm zu erzeugen.

Aus der DE 100 34 381 A1 ist bekannt, mittels einer Informations-Anzeigevorrichtung eine Information im Sichtfeld des Fahrers des Kraftfahrzeugs vor dem Kraftfahrzeug wiedergebbar ist.

Aus der DE 10 2006 050 548 A1 ist bekannt, mittels einer Projektionseinrichtung des Kraftfahrzeugs ein Hologramm auf ein Medium zu projizieren.

Der Erfindung liegt die Aufgabe zugrunde, mit geringem schaltungstechnischen Aufwand eine optische Nachricht in einem Außenbereich des Kraftfahrzeugs anzuzeigen, falls ein Betrachter im Außenbereich ein vorbestimmtes Abstandskriterium erfüllt.

Die Aufgabe wird durch die Gegenstände der unabhängigen Patentansprüche gelöst. Vorteilhafte Weiterbildungen der Erfindung sind durch die Merkmale der abhängigen Patentansprüche gegeben.

Die Erfindung umfasst ein Kraftfahrzeug mit einer Anzeigeeinrichtung, die eine Lichtquelle aufweist und die dazu ausgelegt ist, in einem Außenbereich des Kraftfahrzeugs eine optische Nachricht anzuzeigen. Unter einer optischen Nachricht werden insbesondere ein Hinweistext und/oder ein graphisches Symbol verstanden. Die optische Nachricht ist dabei ein Lichtsignal.

Die Lichtquelle ist dazu ausgelegt, Licht auf ein Projektionselement der Anzeigeeinrichtung zu projizieren. Mit anderen Worten ist keine Projektionsfläche außerhalb des Kraftfahrzeugs nötig. Das Projektionselement ist dazu ausgelegt, aus dem Licht ein die Nachricht darstellendes Lichtfeld zu erzeugen. Hierzu kann das Projektionselement beispielsweise von dem Licht durchleuchtet werden oder von dem Licht angestrahlt werden und durch Reflexion das Lichtfeld bilden. Das Lichtfeld ist derjenige Bereich, in welchem das von dem Projektionselement abgestrahlte Licht sichtbar ist.

Um nun die optische Nachricht nur für solche Betrachter sichtbar zu machen, die sich in einem bestimmten Teil des Außenbereichs des Kraftfahrzeugs befinden, weist die Anzeigeeinrichtung eine Begrenzungseinrichtung auf, die dazu ausgelegt ist, das Lichtfeld im Außenbereich auf einen vorbestimmten Raumwinkelbereich zu begrenzen. Mit anderen Worten wird das Lichtfeld ausgehend von dem Projektionselement nur in einen vorbestimmten Raumwinkelbereich abgestrahlt. Ein solcher begrenzter Raumwinkelbereich wird auch als Eyebox bezeichnet. Ein Betrachter kann also die auf dem Projektionselement sichtbare optische Nachricht nur dann erkennen, wenn er innerhalb des Raumwinkelbereichs steht, d.h. in der Eyebox ist. Erfindungsgemäß wird so ohne eine Sensorik die optische Nachricht nur diesem Betrachter angezeigt.

Erfindungsgemäß ist auch vorgesehen, dass eine Verschwenkeinrichtung dazu ausgelegt ist den jeweiligen Neigungswinkel in Abhängigkeit von einem Nickwinkel des Kraftfahrzeugs einzustellen. Der Nickwinkel des Kraftfahrzeugs kann beispielsweise durch einen Sensor eines ESP (elektronisches Stabilitätsprogramm) des Kraftfahrzeugs ermittelt werden. Das Einstellen des Neigungswinkels in Abhängigkeit von dem Nickwinkel weist den Vorteil auf, dass eine Grenze des Lichtfelds im Außenbereich nicht schwankt, wenn das Kraftfahrzeug über einen unebenen Fahruntergrund fährt. Mit anderen Worten werden Nickbewegungen des Kraftfahrzeugs durch die Verschwenkeinrichtung ausgeglichen.

Erfindungsgemäß ist weiterhin vorgesehen, dass eine obere Grenze des Lichtfelds ausgehend vom Kraftfahrzeug schräg nach unten gerichtet ist, sodass ein Betrachter bei einer gegebenen Augenhöhe die Nachricht nur sieht, falls er sich in einem vorbestimmten Höchstabstand vom Heck des Kraftfahrzeugsbefindet. Hierdurch ergibt sich der Vorteil, dass die optische Nachricht abstandsabhängig im Außenbereich sichtbar ist. Dies ist insbesondere dann vorteilhaft, wenn die Nachricht eine Aufforderung umfasst, durch welche aufgefordert wird, den Mindestabstand von dem Kraftfahrzeug einzuhalten oder nicht zu unterschreiten.

Die Erfindung weist Weiterbildungen auf, durch die sich zusätzliche Vorteile ergeben.

Gemäß einer Weiterbildung ist die Anzeigeeinrichtung dazu ausgelegt, das Lichtfeld in einen an ein Heck des Kraftfahrzeugs angrenzenden rückwärtigen Bereich des Kraftfahrzeugs abzustrahlen. Hierdurch ergibt sich der Vorteil, dass die optische Nachricht nur vom nachfolgenden Kraftfahrzeug aus gesehen werden kann. Mit anderen Worten ist das Lichtfeld durch die Begrenzungseinrichtung auf den rückwärtigen Bereich des Kraftfahrzeugs begrenzt.

Gemäß einer Weiterbildung ist ein Azimut-Öffnungswinkel des Lichtfelds, das heißt ein horizontaler Öffnungswinkel, kleiner als 20 Grad, insbesondere kleiner als 10 Grad. Hierbei ist das Lichtfeld im Außenbereich entlang eines Streifens ausgerichtet, der sich in Fahrzeuglängsrichtung hinter einem Fahrersitz des Kraftfahrzeugs erstreckt. Hierdurch ergibt sich der Vorteil, dass in einem nachfolgenden Kraftfahrzeug nur der Fahrer, nicht aber der Beifahrer, die optische Nachricht sieht. Mit anderen Worten wird die optische Nachricht personenselektiv sichtbar, indem nur ein Fahrer und nicht der Beifahrer die Nachricht erkennen kann.

Um das Lichtfeld, also das von dem Projektionselement ausgehende, die optische Nachricht darstellende Licht, in der beschriebenen Weise zu begrenzen, ist gemäß einer Weiterbildung vorgesehen, dass die Begrenzungseinrichtung Lamellen und/oder einen Kollimator aufweist. Mittels Lamellen und/oder eines Kollimators kann von dem Projektionselement ausgehendes Streulicht absorbiert werden. Die Lamellen und/oder der Kollimator können sich entlang einer Abstrahlfläche für das Licht erstrecken, so dass Lichtkanäle gebildet sind, deren Kanalwände gestreutes Licht absorbieren.

Gemäß einer Weiterbildung sind das Projektionselement und die Begrenzungseinrichtung durch ein holographisches optisches Element (HOE) gebildet. Mit anderen Worten wird die optische Nachricht als Hologramm dargestellt. Ein holographisches optisches Element weist den Vorteil auf, dass das Projektionselement und die Begrenzungseinrichtung durch ein und dieselbe Anordnung aus einem holographischen Bild oder Filmmaterial oder einer holographischen Platte gebildet sind. Des Weiteren weist ein Hologramm den Vorteil auf, dass ein scharf abgegrenztes Lichtfeld erzeugt wird, das heißt ein Übergang aus dem Lichtfeld in einen lichtfreien Bereich im Bereich der Grenze des Lichtfelds ist besonders schmal.

Gemäß einer Weiterbildung ist die Verschwenkeinrichtung dazu ausgelegt, den jeweiligen Neigungswinkel des Projektionselements und/oder der Begrenzungseinrichtung in Abhängigkeit von einem weiteren Betriebsparameter des Kraftfahrzeugs einzustellen.

Der weitere Betriebsparameter ist gemäß einer Ausführungsform eine Fahrgeschwindigkeit des Kraftfahrzeugs. Die Fahrgeschwindigkeit kann beispielsweise über einen Kommunikationsbus des Kraftfahrzeugs, beispielsweise einen CAN-Bus (CAN - controller area network), durch die Anzeigeeinrichtung ermittelt werden. Durch Einstellen des Neigungswinkels in Abhängigkeit von der Fahrgeschwindigkeit ergibt sich der Vorteil, dass eine Sichtbarkeitsgrenze der Nachricht in Abhängigkeit von der Fahrgeschwindigkeit auf unterschiedliche Abstände zum Kraftfahrzeug eingestellt wird.

Das erfindungsgemäße Kraftfahrzeug ist bevorzugt als Kraftwagen, insbesondere als Personenkraftwagen, ausgestaltet.

Zu der Erfindung gehört auch ein Verfahren zum Anzeigen einer optischen Nachricht in einem Außenbereich des Kraftfahrzeugs. Durch eine Lichtquelle wird Licht auf ein Projektionselement projiziert. Das Projektionselement erzeugt aus dem Licht ein die Nachricht darstellendes Lichtfeld. Hierdurch ist die optische Nachricht von außerhalb des Kraftfahrzeugs sichtbar, ohne dass eine Projektionsfläche außerhalb des Kraftfahrzeugs nötig ist. Die Nachricht kann somit direkt mit dem Auge fokussiert werden. Des Weiteren wird das Lichtfeld auf einen vorbestimmten Raumwinkelbereich im Außenbereich durch eine Begrenzungseinrichtung begrenzt. Hierdurch ergibt sich der Vorteil, dass Sichtbarkeit der Nachricht von einer Relativposition eines Betrachters zu dem Kraftfahrzeug abhängig ist. Darüber hinaus ist eine Verschwenkeinrichtung bereitgestellt, die dazu ausgelegt ist, einen Neigungswinkel des Projektionselements und/oder der Begrenzungseinrichtung in Abhängigkeit von einem Nickwinkel des Kraftfahrzeugs einzustellen.

Zu der Erfindung gehören auch Weiterbildungen des erfindungsgemäßen Verfahrens, welche Merkmale aufweisen, die bereits im Zusammenhang mit den Weiterbildungen des erfindungsgemäßen Kraftfahrzeugs beschrieben worden sind. Aus diesem Grund sind die entsprechenden Weiterbildungen des erfindungsgemäßen Verfahrens hier nicht noch einmal beschrieben.

Im Folgenden ist ein Ausführungsbeispiel der Erfindung beschrieben. Hierzu zeigt:
- Fig. 1: eine schematische Darstellung einer Ausführungsform des erfindungsgemäßen Kraftfahrzeugs,
- Fig. 2: eine Fahrsituation, in welcher ein Fremdfahrzeug auf das Kraftfahrzeug auffährt,
- Fig. 3: die Fahrsituation von Fig. 2, wobei das Fremdfahrzeug zu nahe an das Kraftfahrzeug aufgefahren ist, und
- Fig. 4: die Fahrsituation von Fig. 3 in einer Draufsicht.

Bei dem im Folgenden erläuterten Ausführungsbeispiel handelt es sich um eine bevorzugte Ausführungsform der Erfindung. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

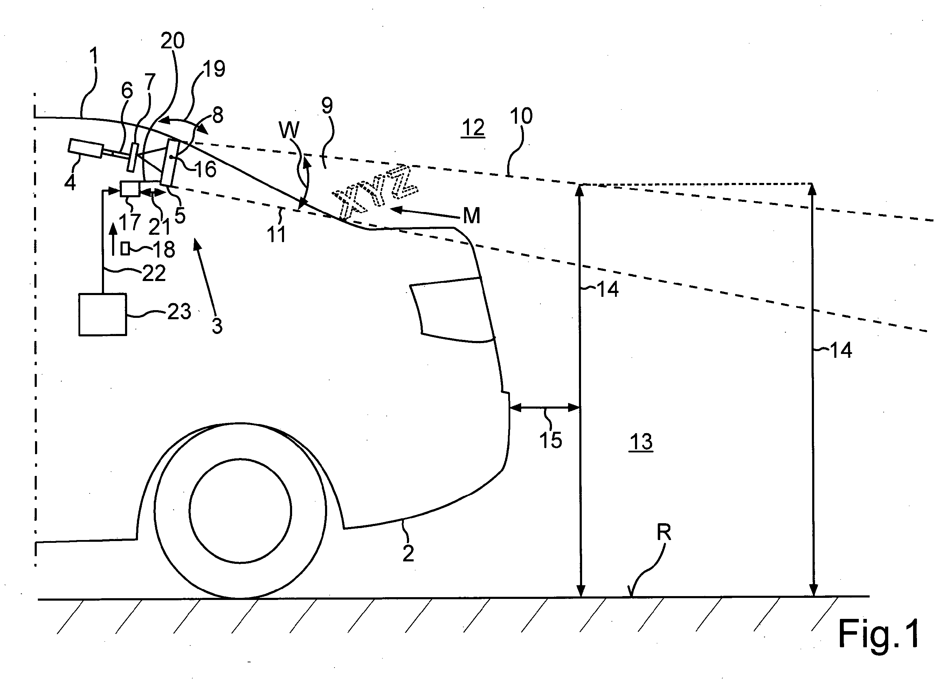

In Fig. 1 ist von einem Kraftfahrzeug 1 ein Heck 2 dargestellt. Bei dem Kraftfahrzeug 1 kann es sich um einen Kraftwagen, insbesondere einen Personenkraftwagen, handeln.

Das Kraftfahrzeug 1 weist eine Anzeigeeinrichtung 3 auf, die eine Lichtquelle 4 und ein Projektionselement 5 aufweist. Die Lichtquelle 4 kann beispielsweise eine Laserlichtquelle sein. Die Lichtquelle 4 erzeugt Licht 6, das optional durch eine Optik 7, beispielsweise eine Linse, aufgeweitet werden kann. Das Licht 6 wird auf das Projektionselement 5 projiziert. Das Projektionselement 5 kann beispielsweise transparent sein. Die Anzeigeeinrichtung 3 weist des Weiteren eine Begrenzungseinrichtung 8 auf. Durch die Begrenzungseinrichtung 8 wird ein von dem Projektionselement 5 ausgehendes Lichtfeld 9 begrenzt. Hierdurch werden eine Obergrenze 10 und optional eine Untergrenze 11 des Lichtfelds 9 in einem Außenbereich 12 des Kraftfahrzeugs 1 eingestellt. Das Lichtfeld 9 stellt eine Nachricht M dar. Die Nachricht M ist aufgrund der Abstrahlrichtung des Lichtfelds 9 nur in einem rückwärtigen Bereich 13 hinter dem Heck 2 des Kraftfahrzeugs 1 sichtbar. Die obere Grenze 10 ist ausgehend von dem Projektionselement 5 schräg nach unten gerichtet. Die obere Grenze 10 schließt mit einem Fahruntergrund R einen spitzen Winkel ein, der bevorzugt größer als 10°, insbesondere größer als 20° ist.

Ein Betrachter mit einer vorgegebenen Augenhöhe 14, die beispielsweise in einem Bereich von 1 Meter bis 1,60 Meter liegen kann, sieht hierdurch die Nachricht M nur, wenn er sich in einem vorbestimmten Höchstabstand 15 vom Heck 2 des Kraftfahrzeugs 1 befindet. Dann befinden sich die Augen des Betrachters im Lichtfeld 9, das heißt innerhalb der oberen Grenze 10 und der unteren Grenze 11. Die Augenhöhe 14 kann beispielsweise in Bezug auf den Fahruntergrund R bezogen sein.

Zum Begrenzen des Lichtfelds kann die Begrenzungseinrichtung 8 beispielsweise durch Lamellen oder einen Kollimator bereitgestellt sein. Das Projektionselement 5 kann dann beispielsweise eine TFT-Anzeige (TFT - thin film transistor) oder ein transparentes, gefärbtes Element beispielsweise aus Glas oder Kunststoff sein. Das Projektionselement 5 und die Begrenzungseinrichtung 8 können auch zusammen durch ein holographisches optisches Element bereitgestellt sein. Mit anderen Worten stellt die Nachricht M in diesem Fall ein Hologramm dar.

Das Projektionselement 5 und/oder die Begrenzungseinrichtung 8 können verschwenkbar ausgestaltet sein, indem sie beispielsweise um eine Drehachse 16 drehbar gelagert sind. Eine Verschwenkeinrichtung 17 kann dazu ausgelegt sein, in Abhängigkeit von einem Betriebsparameter 18 des Kraftfahrzeugs 1 einen Neigungswinkel 19 des Projektionselements 5 und/oder der Begrenzungseinrichtung 8 um die Drehachse 16 einzustellen. Hierzu kann die Verschwenkeinrichtung 17 beispielsweise über ein mechanisches Kopplungselement 20 eine Verschiebebewegung oder Verschwenkbewegung 21 des Projektionselements 5 und/oder der Begrenzungseinrichtung 8 erzeugen. Der Betriebsparameter 18 ist ein Nickwinkel des Kraftfahrzeugs und kann zusätzlich beispielsweise die aktuelle Fahrgeschwindigkeit des Kraftfahrzeugs 1 sein. Der Betriebsparameter 18 kann beispielsweise über einen Kommunikationsbus 22 des Kraftfahrzeugs 1 von einer Sensoreinrichtung 23 des Kraftfahrzeugs 1 hin zu der Verschwenkeinrichtung 17 übertragen werden. Die Sensoreinrichtung 23 kann beispielsweise ein ESP (elektronisches Stabilitätsprogramm) und/oder ein Tachometer des Kraftfahrzeugs 1 sein.

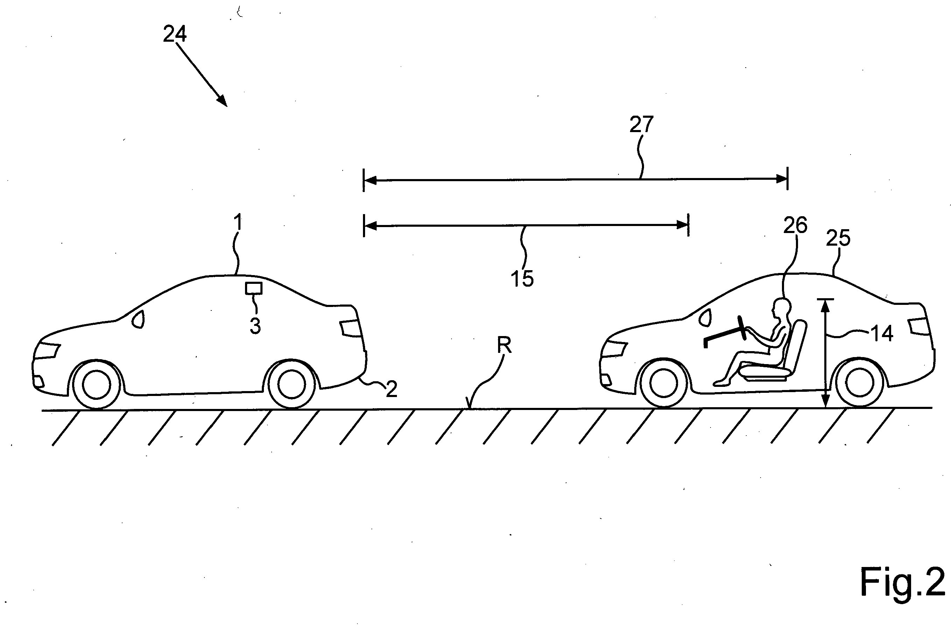

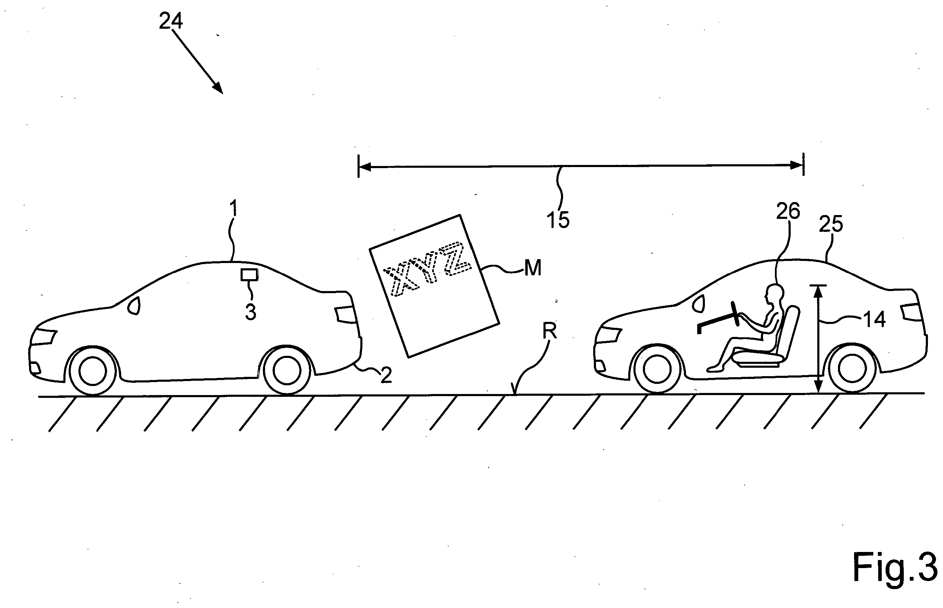

In Fig. 2 und Fig. 3 ist veranschaulicht, welcher Effekt mit der Anzeigeeinrichtung 3 des Kraftfahrzeugs 1 erzielt wird. Hierzu ist in Fig. 2 und Fig. 3 eine Fahrsituation 24 dargestellt, in welcher hinter dem Kraftfahrzeug 1 ein Fremdfahrzeug 25 auf das Kraftfahrzeug 1 auffährt, das heißt sich dem Kraftfahrzeug 1 nähert. In Fig. 2 weist ein Fahrer 26 des Fremdfahrzeugs 25 einen Abstand 27 vom Heck 2 des Kraftfahrzeugs 1 auf, der größer als der Mindestabstand 15 ist. Eine Augenhöhe des Fahrers 26 beträgt die bereits beschriebene Augenhöhe 14. Da der Fahrer 26 noch weit genug weg vom Heck 2 ist, befinden sich seine Augen außerhalb des Lichtfeldes 9. Mit anderen Worten befinden sich die Augen in der Augenhöhe 14 überhalb der oberen Grenze 10 des Lichtfeldes 9. Der Fahrer 26 sieht daher die Nachricht M nicht.

In Fig. 3 ist die Fahrsituation 24 dargestellt, wobei sich der Fahrer 26 mit dem Fremdfahrzeug 25 so weit an das Heck 2 des Kraftfahrzeugs 1 angenähert hat, dass sein Abstand gleich oder kleiner als der Mindestabstand 15 ist. Mit anderen Worten befinden sich die Augen des Fahrers 26 im Lichtfeld 9. Daher ist im Blickfeld des Fahrers 26 die Nachricht M sichtbar.

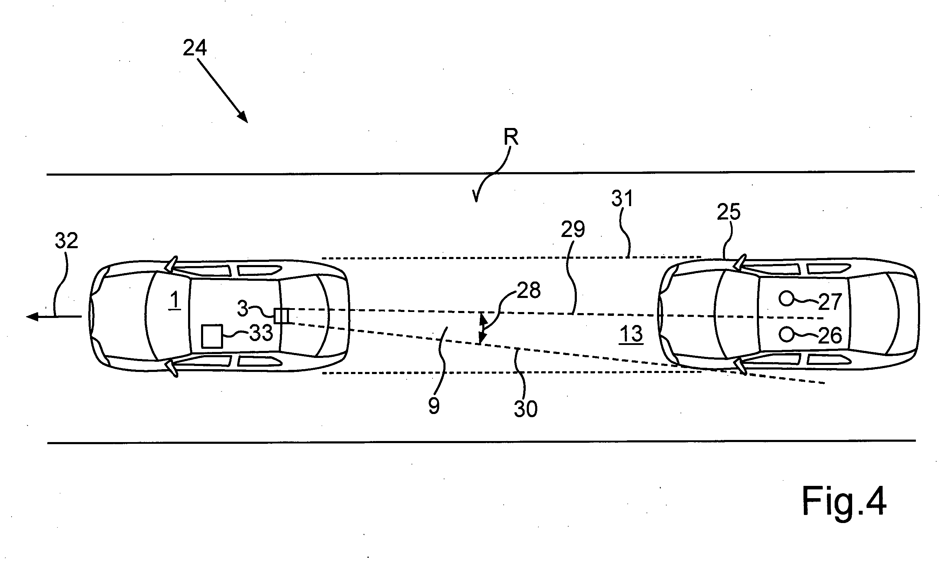

In Fig. 4 ist die Fahrsituation 24 aus einer Vogelperspektive, das heißt von oben, dargestellt. Neben dem Fahrer 26 im Fremdfahrzeug 25 kann ein Beifahrer 27 sitzen. Ein Azimut-Winkel 28, der von einer rechten Grenze 29 und einer linken Grenze 30 des Lichtfelds 9 eingeschlossen ist, kann derart eingestellt sein, dass er nur den Fahrer 26, und nicht den Beifahrer 27 erfasst. Mit anderen Worten kann das Lichtfeld 9 in dem Heckbereich 13 auf einen Streifen 31 begrenzt sein, der in Fahrzeuglängsrichtung 32 hinter einem Fahrersitz 33 des Kraftfahrzeugs 1 verläuft oder sich erstreckt. Das Lichtfeld ist somit in vertikaler Richtung auf einen vorbestimmten Raumwinkelbereich W begrenzt. Hierdurch wird der Beifahrer 27 nicht durch die Nachricht irritiert oder verwirrt.

Dichtes Auffahren ist häufig die Ursache für schwere Verkehrsunfälle. Um einen zu nahe auffahrenden Fahrer 26 eines Fremdfahrzeugs 25 zu warnen, wird bei dem Kraftfahrzeug 1 ein holographisches Objekt mit einer Nachricht M im Heckbereich 13 im Raum dargestellt. Dies erscheint für den Fahrer 26 erst ab einem definierten Mindestabstand 15 vom Heck 2 des Kraftfahrzeugs 1. Damit erscheint die Nachricht M erst bei zu dichtem Auffahren. Durch die Anzeigeeinrichtung 3 ist es möglich, einem nachfolgenden Fahrzeug einen Hinweis zu geben, den Abstand einzuhalten, ohne weitere Verkehrsteilnehmer damit zu stören. Je nach Präzision der Optik ist auch nur eine Sichtbarkeit für den Fahrer und nicht für den Bei- oder Mitfahrer des Fremdfahrzeugs, das heißt des nachfolgenden Fahrzeugs 25, möglich. Des Weiteren kann die Funktion geschwindigkeitsabhängig geregelt werden, indem die Anordnung mechanisch nachjustiert wird.

Der Laserstrahl mit dem Licht 6 kann zunächst durch eine Optik 7 geweitet werden oder auch gleich auf das holographische optische Element, das aus dem Projektionselement 5 und der Begrenzungseinrichtung 8 gebildet sein kann, durch die Heckscheibe oder die Heckleuchte des Kraftfahrzeugs 1 nach hinten abgestrahlt werden.

Insgesamt zeigt das Beispiel, wie durch die Erfindung ein holographischer Hinweis für auffahrende Fahrzeuge durch ein holographisches optisches Element (HOE) bereitgestellt werden kann.

## Patentansprüche

1. Kraftfahrzeug (1) mit
- einer Anzeigeeinrichtung (3), die eine Lichtquelle (4) aufweist und die dazu ausgelegt ist, in einem Außenbereich (12) des Kraftfahrzeugs (1) eine optische Nachricht (M) anzuzeigen, wobei die Lichtquelle (4) dazu ausgelegt ist, Licht (6) auf ein Projektionselement (5) der Anzeigeeinrichtung (3) zu projizieren, wobei das Projektionselement (5) dazu ausgelegt ist, aus dem Licht (6) ein solches die Nachricht (M) darstellendes Lichtfeld (9) zu erzeugen, durch welches die optische Nachricht (M) von außerhalb des Kraftfahrzeugs (1) sichtbar ist, ohne dass eine Projektionsfläche außerhalb des Kraftfahrzeugs (1) nötig ist und somit die Nachricht (M) direkt mit dem Auge fokussierbar ist,
- einer Begrenzungseinrichtung (8) der Anzeigeeinrichtung (3), welche dazu ausgelegt ist, ein von dem Projektionselement (5) erzeugtes Lichtfeld (9) in dem Außenbereich (12) auf einen vorbestimmten Raumwinkelbereich (W,28) zu begrenzen, und
- einer Verschwenkeinrichtung (17),
**dadurch gekennzeichnet, dass**
die Verschwenkeinrichtung (17) dazu ausgelegt ist, einen jeweiligen Neigungswinkel (19) des Projektionselements (5) und/oder der Begrenzungseinrichtung (8) in Abhängigkeit von einem Nickwinkel des Kraftfahrzeugs (1) einzustellen, und dass eine obere Grenze (10) des Lichtfelds (9) ausgehend vom Kraftfahrzeug (1) schräg nach unten gerichtet ist, so dass ein Betrachter (26) bei einer gegebenen Augenhöhe (14) die Nachricht (M) nur sieht, falls er sich in einem vorbestimmten Höchstabstand (15) vom Heck (2) des Kraftfahrzeugs (1) befindet.

2. Kraftfahrzeug (1) nach Anspruch 1, wobei die Anzeigeeinrichtung (3) dazu ausgelegt ist, das Lichtfeld (9) in einen an ein Heck (2) des Kraftfahrzeugs (1) angrenzenden rückwärtigen Bereich (13) des Kraftfahrzeugs (1) abzustrahlen.

3. Kraftfahrzeug (1) nach einem der vorhergehenden Ansprüche, wobei die Nachricht (M) eine Aufforderung umfasst, durch welche aufgefordert wird, Abstand zu halten.

4. Kraftfahrzeug (1) nach einem der vorhergehenden Ansprüche, wobei ein Azimut-Öffnungswinkel (28) des Lichtfelds (9) kleiner als 20°, insbesondere kleiner als 10°, ist und das Lichtfeld (9) im Außenbereich (13) einlang eines Streifens (31) ausgerichtet ist, der sich in Fahrzeuglängsrichtung (32) hinter einem Fahrersitz (33) des Kraftfahrzeugs (1) erstreckt.

5. Kraftfahrzeug (1) nach einem der vorhergehenden Ansprüche, wobei die Begrenzungseinrichtung (8) Lamellen und/oder einen Kollimator aufweist.

6. Kraftfahrzeug (1) nach einem der vorhergehenden Ansprüche, wobei das Projektionselement (5) und die Begrenzungseinrichtung (8) durch ein holographisches optisches Element, HOE, gebildet sind.

7. Kraftfahrzeug (1) nach einem der vorhergehenden Ansprüche, wobei der jeweilige Neigungswinkel (19) des Projektionselements (5) und/oder der Begrenzungseinrichtung (8) in Abhängigkeit von einem weiteren Betriebsparameter (18) des Kraftfahrzeugs (1) einstellbar ist.

8. Kraftfahrzeug (1) nach Anspruch 7, wobei die Verschwenkeinrichtung (17) dazu ausgelegt ist, den jeweiligen Neigungswinkel (19) in Abhängigkeit von einer Fahrgeschwindigkeit des Kraftfahrzeugs (1) einzustellen.

9. Verfahren zum Anzeigen einer optischen Nachricht (M) in einem Außenbereich (12) des Kraftfahrzeugs (1), mit den Schritten:
- Projizieren von Licht (6) auf ein Projektionselement (5) durch eine Lichtquelle (4),
- Erzeugen eines die Nachricht (M) darstellenden Lichtfelds (9) aus dem Licht (6) durch das Projektionselement (5), wobei durch das Lichtfeld (9) die optische Nachricht (M) von außerhalb des Kraftfahrzeugs (1) sichtbar ist, ohne dass eine Projektionsfläche außerhalb des Kraftfahrzeugs (1) nötig ist und somit die Nachricht (M) direkt mit dem Auge fokussierbar ist, wobei eine obere Grenze (10) des Lichtfelds (9) ausgehend vom Kraftfahrzeug (1) schräg nach unten gerichtet ist, so dass ein Betrachter (26) bei einer gegebenen Augenhöhe (14) die Nachricht (M) nur sieht, falls er sich in einem vorbestimmten Höchstabstand (15) vom Heck (2) des Kraftfahrzeugs (1) befindet,
- Begrenzen des Lichtfelds (9) auf einen vorbestimmten Raumwinkelbereich (W, 28) in dem Außenbereich (12) durch eine Begrenzungseinrichtung (8), und
- Einstellen eines jeweiligen Neigungswinkels (19) des Projektionselements (5) und/oder der Begrenzungseinrichtung (8) mittels einer Verschwenkeinrichtung (17) in Abhängigkeit von einem Nickwinkel des Kraftfahrzeugs (1).

## Claims

1. Motor vehicle (1) having
- a display apparatus (3) which has a light source (4) and which is designed to display an optical message (M) in an outside region (12) of the motor vehicle (1), wherein the light source (4) is designed to project light (6) onto a projection element (5) of the display apparatus (3), wherein the projection element (5) is designed to generate from the light (6) such a light field (9) showing the message (M), by means of which light field the optical message (M) is visible from outside the motor vehicle (1) without a projection surface being required outside the motor vehicle (1) and the message (M) can thus be directly focussed on with the eye,
- a limiting apparatus (8) of the display apparatus (3), which is designed to limit a light field (9) generated by the projection element (5) in the outside region (12) to a predetermined solid angle range (W, 28), and
- a pivoting apparatus (17),
**characterised in that**
the pivoting apparatus (17) is designed to set a respective tilt angle (19) of the projection element (5) and/or of the limiting apparatus (8) as a function of a pitch angle of the motor vehicle (1), and that an upper limit (10) of the light field (9) is directed obliquely downwards from the motor vehicle (1), such that an observer (26), at a given eye level (14), sees the message (M) only if he/she is at a predetermined maximum distance (15) from the rear (2) of the motor vehicle (1).

2. Motor vehicle (1) according to claim 1, wherein the display apparatus (3) is designed to radiate the light field (9) into a rear region (13) of the motor vehicle (1) adjacent to a rear (2) of the motor vehicle (1).

3. Motor vehicle (1) according to any of the preceding claims, wherein the message (M) comprises a request to keep distance.

4. Motor vehicle (1) according to any of the preceding claims, wherein an azimuth opening angle (28) of the light field (9) is smaller than 20°, in particular smaller than 10°, and the light field (9) is aligned in the outside region (13) along a strip (31) which extends in the vehicle longitudinal direction (32) behind a driver's seat (33) of the motor vehicle (1).

5. Motor vehicle (1) according to any of the preceding claims, wherein the limiting apparatus (8) has lamellae and/or a collimator.

6. Motor vehicle (1) according to any of the preceding claims, wherein the projection element (5) and the limiting apparatus (8) are formed by a holographic optical element, HOE.

7. Motor vehicle (1) according to any of the preceding claims, wherein the respective tilt angle (19) of the projection element (5) and/or of the limiting apparatus (8) can be set as a function of a further operating parameter (18) of the motor vehicle (1).

8. Motor vehicle (1) according to claim 7, wherein the pivoting apparatus (17) is designed to set the respective tilt angle (19) as a function of a driving speed of the motor vehicle (1).

9. Method for displaying an optical message (M) in an outside region (12) of the motor vehicle (1), comprising the steps of:
- projecting light (6) onto a projection element (5) by means of a light source (4),
- generating a light field (9) showing the message (M) from the light (6) by means of the projection element (5), wherein, by means the light field (9), the optical message (M) is visible from outside the motor vehicle (1) without a projection surface being required outside the motor vehicle (1) and the message (M) can thus be directly focussed on with the eye, wherein an upper limit (10) of the light field (9) is directed obliquely downwards from the motor vehicle (1), such that an observer (26), at a given eye level (14), sees the message (M) only if he/she is at a predetermined maximum distance (15) from the rear (2) of the motor vehicle (1),
- limiting the light field (9) to a predetermined solid angle range (W, 28) in the outside region (12) by means of a limiting apparatus (8), and
- setting a respective tilt angle (19) of the projection element (5) and/or of the limiting apparatus (8) by means of a pivoting apparatus (17) as a function of a pitch angle of the motor vehicle (1).

## Revendications

1. Véhicule automobile (1) avec
- un dispositif d'affichage (3) qui présente une source lumineuse (4) et est conçu pour afficher un message optique (M) dans une région extérieure (12) du véhicule automobile (1), dans lequel la source lumineuse (4) est conçue pour projeter de la lumière (6) sur un élément de projection (5) du dispositif d'affichage (3), dans lequel l'élément de projection (5) est conçu pour générer, grâce à ladite lumière (6), un champ lumineux (9) montrant le message (M) de telle manière que le message optique (M) est visible depuis l'extérieur du véhicule automobile (1) sans qu'une surface de projection située à l'extérieur du véhicule automobile (1) soit nécessaire et l'œil peut ainsi faire la mise au point directement sur le message (M),
- un dispositif de limitation (8) du dispositif d'affichage (3) qui est conçu pour limiter un champ lumineux (9) généré par l'élément de projection (5) dans la région extérieure (12) à une région d'angle solide (W, 28) prédéterminée, et
- un dispositif pivotant (17),
**caractérisé en ce que**
le dispositif de pivotement (17) est conçu pour ajuster un angle d'inclinaison (19) respectif de l'élément de projection (5) et/ou du dispositif de limitation (8) en fonction d'un angle de tangage du véhicule automobile (1), et une limite supérieure (10) du champ lumineux (9) partant du véhicule automobile (1) est orientée de manière oblique vers le bas de sorte qu'un observateur (26), pour une hauteur de regard (14) donnée, ne voit le message (M) que s'il se trouve à une distance maximale (15) prédéterminée de l'arrière (2) du véhicule automobile (1).

2. Véhicule automobile (1) selon la revendication 1, dans lequel le dispositif d'affichage (3) est conçu pour émettre le champ lumineux (9) dans une région arrière (13) du véhicule automobile (1) attenante à un arrière (2) du véhicule automobile (1).

3. Véhicule automobile (1) selon l'une quelconque des revendications précédentes, dans lequel le message (M) comprend une requête demandant de rester à distance.

4. Véhicule automobile (1) selon l'une quelconque des revendications précédentes, dans lequel un angle d'ouverture azimutal (28) du champ lumineux (9) est inférieur à 20°, en particulier inférieur à 10°, et le champ lumineux (9) dans la région extérieure (13) est aligné sur une bande (31) qui s'étend dans la direction longitudinale de véhicule (32) derrière un siège conducteur (33) du véhicule automobile (1).

5. Véhicule automobile (1) selon l'une quelconque des revendications précédentes, dans lequel le dispositif de limitation (8) présente des lamelles et/ou un collimateur.

6. Véhicule automobile (1) selon l'une quelconque des revendications précédentes, dans lequel l'élément de projection (5) et le dispositif de limitation (8) sont formés par un élément optique holographique HOE.

7. Véhicule automobile (1) selon l'une quelconque des revendications précédentes, dans lequel l'angle d'inclinaison (19) respectif de l'élément de projection (5) et/ou du dispositif de limitation (8) peut être ajusté en fonction d'un autre paramètre de fonctionnement (18) du véhicule automobile (1).

8. Véhicule automobile (1) selon la revendication 7, dans lequel le dispositif de pivotement (17) est conçu pour ajuster l'angle d'inclinaison (19) respectif en fonction d'une vitesse de conduite du véhicule automobile (1).

9. Procédé d'affichage d'un message optique (M) dans une région extérieure (12) du véhicule automobile (1), comprenant les étapes consistant à :
- projeter de lumière (6) sur un élément de projection (5) grâce à une source lumineuse (4),
- générer, à partir de la lumière (6) et grâce à l'élément de projection (5), un champ lumineux (9) montrant le message (M), dans lequel le message optique (M) est visible de l'extérieur du véhicule automobile (1) grâce au champ lumineux (9) sans qu'une surface de projection située à l'extérieur du véhicule automobile (1) soit nécessaire et de telle manière que l'œil peut faire la mise au point directement sur le message (M), dans lequel une limite supérieure (10) du champ lumineux (9) partant du véhicule automobile (1) est orientée de manière oblique vers le bas de sorte qu'un observateur (26), pour une hauteur de regard (14) donnée, ne voit le message (M) que s'il se trouve à une distance maximale (15) prédéterminée de l'arrière (2) du véhicule automobile (1),
- limiter le champ lumineux (9) dans la région extérieure (12) à une région d'angle solide (W, 28) prédéterminée grâce à un dispositif de limitation (8), et
- ajuster un angle d'inclinaison (19) respectif de l'élément de projection (5) et/ou du dispositif de limitation (8) au moyen d'un dispositif de pivotement (17) en fonction d'un angle de tangage du véhicule automobile (1).
